(19) **Europäisches Patentamt**
**European Patent Office**
**Office européen des brevets**

(11) **EP 3 382 958 B1**

(12) **EUROPEAN PATENT SPECIFICATION**

(45) Date of publication and mention
of the grant of the patent:
**12.02.2020 Bulletin 2020/07**

(51) Int Cl.:
**H04L 12/825** *(2013.01)*          **H04L 12/835** *(2013.01)*
*H04W 92/12* *(2009.01)*          *H04W 28/06* *(2009.01)*

(21) Application number: **17164143.4**

(22) Date of filing: **31.03.2017**

(54) **FORWARDING AGGREGATED TRAFFIC**

WEITERLEITUNG VON AGGREGIERTEM VERKEHR

TRANSMISSION DE TRAFIC REGROUPÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.10.2018 Bulletin 2018/40**

(73) Proprietor: **Nokia Solutions and Networks Oy
02610 Espoo (FI)**

(72) Inventors:
• **Olaziregi, Nikolas
2018 Antwerpen (BE)**

• **Tsang, Ing-Jyh
2018 Antwerpen (BE)**

(74) Representative: **IP HILLS NV
Hubert Frère-Orbanlaan 329
9000 Gent (BE)**

(56) References cited:
WO-A1-2013/020047     WO-A1-2015/150717
US-A1- 2002 167 926     US-A1- 2013 243 075

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The present invention generally relates to a cloud radio access network, C-RAN. C-RAN is a centralized cloud computing-based architecture for radio access networks that supports future wireless communication standards such as the 5th generation wireless systems, 5G.

**Background**

In the first and second generation of cellular technology, 1G and 2G, base stations had an all-in-one architecture meaning that analogue and digital as well as power functions were housed in a single cabinet. Furthermore, the backhaul transmission equipment was typically housed in the single cabinet. The radio frequency, RF, signal utilized for wireless communication in the network was generated by a base station RF unit and propagated through pairs of RF cables up to the antennas on the top of the base station tower. As a consequence, the base station for these generations of cellular technology was referred to as all-in-one macro base stations.

In the subsequent 3rd generation of cellular technology, 3G, a distributed base architecture was introduced. The radio function unit, also identified as a remote radio head, RRH, was separated from the baseband unit, BBU, by a fiber. Digital baseband signals were transmitted over this fiber according to, for example, the Common Public Radio Interface, CPRI, standard. An RRH was installed on top of a tower close to the antenna which as a consequence reduces losses compared to traditional base stations where an RF signal had to travel through a long cable from a base station cabinet to the antenna at the top of the tower. Moreover, a fiber link between an RRH and BBU offers more flexibility in network planning and deployment compared to an all-in-one architecture since they may be placed a few hundred meters or even a few kilometres away from each other.

The concept of C-RAN introduces further changes to the architecture of mobile networks. The classical fronthaul, FH, link that connects RRHs and a BBU is further extended to a remote site hosting processing assets. However, although the link between these network elements is spread in space with an increased distance compared to the distributed base architecture of 3G, metrics for this interface maintain the same values e.g. for 4G. In particular, the CPRI standard requires, for example, a transport delay budget of $100\mu s$ to $250\mu s$ and a constant bitrate. These specifications are required to enable the timely processing of fast retransmissions together with link adaptation algorithms that guarantee radio performance e.g. of 4G.

In a future wireless communication standard, in particular 5G, higher throughputs will be supported. This will be achieved by larger bandwidths and more antenna elements per RRH. Alongside higher throughputs, advanced inter-cell coordination mechanisms will be added to optimize radio performance. However, from a capacity point of view a classical FH solution as deployed in the former standards is not cost effective for any access technology in the new generation. In order to overcome this hurdle, further developments to the architecture of mobile network are made, such as the evolution of the baseline architecture with the introduction of a virtualised version of a BBU, a vBBU, and an improved RRH, a RRH+, which incorporates low level BBU functions. The redistribution of functions includes a new interface specification referred as X-haul, XH.

However, the performance requirements of the evolved CPRI standard will be tighter in 5G. In order to meet these requirements a non-blocking traffic path between end-points, i.e. an RRH+ and BBU, may be provided. This implies that the network is dimensioned based on an absolute maximum traffic. Another solution is to dimension the network based on a maximum traffic per time of day. This is based on a statistical analysis of fronthaul traffic. The latter solution requires the exchange of resource information between a mobile resource allocation manager and an access network resource allocation manager.

In WO2013/020047A1 a method and apparatus are disclosed for controlling a data flow in multiflow wireless environments based on a dynamic scaling of flows control request message transmission. In US2013/0243075A1 a system and method are disclosed for modifying streaming data based on radio frequency information. As radio transceivers transition move to a shared resource or cloud model and the existing radio transceivers are split into a baseband unit and a remote radio head, radio frequency information including power levels, encoding, data rates, and bandwidth can be provided to video optimization server. In US2002/0167926A1 an apparatus and method for controlling packet data transmission between a base station controller and a base transceiver system in a mobile communication network is disclosed. The base station controller transmits as much packet data as an amount that can be stored in a buffer of the base transceiver system. The base transceiver system has the buffer for temporarily storing the packet data, to be transmitted to a mobile station, received from the base station controller. In WO2015/150717A1 a user device comprising a receiver for establishing a communication link with a wireless network and an access point selecting module for selecting an access point to use in establishing the communication link is disclosed. The access point selecting module is configured to identify a plurality of access points within range of the user device and for each one of the identified access points a maximum rate of data throughput that is achievable if using the access point to connect to the network is determined.

## Summary

However, in both solutions the amount of RRHs that can be served in a given access network domain is limited. Especially when there are very high peak to average traffic ratios, these solutions are highly inefficient in terms of network utilization. Furthermore when an access network supports multi services, such as residential or wireline traffic next to mobile traffic, dimensioning to a periodical maximum deprioritizes the former over the latter.

It is an object of the present disclosure to alleviate the above drawbacks and to disclose, among others, a system for optimising traffic for an access network supporting multi services while satisfying to the requirements imposed by the evolution of CPRI standard.

This object is achieved, according to a first aspect, by a system comprising:

- a virtual baseband unit further comprising a radio resource manager; and
- an access node further comprising a traffic manager; and

wherein the virtual baseband unit is configured:

- to connect to a serving gateway for receiving backhaul traffic; and
- to connect to the access node; and
- to transform the backhaul traffic under the control of the radio resource manager to X-haul traffic; and
- to forward the X-haul traffic to the access node;

wherein the access node is configured:

- to connect to a broadband network gateway for receiving wireline traffic; and
- to receive the X-haul traffic; and
- to forward aggregated traffic comprising the X-haul traffic and the wireline traffic to two or more network terminations through the traffic manager;

wherein the access node is further configured to instruct the virtual baseband unit to buffer the backhaul traffic based on resource data exchanged between the virtual baseband unit and the access node such that the aggregated traffic is less than or equal to a capacity threshold.

The virtual baseband unit, vBBU, is configured to connect to a serving gateway, SGW. The SGW is further connected to a PDN Gateway, PGW, in the mobile network. Traffic received from the mobile network core network is forwarded to the vBBU and is labelled as the backhaul traffic of the latter. Next, the backhaul traffic is processed under the control of the radio resource manager through the functions composing the vBBU protocol stack. Through this processing, the backhaul traffic in transformed in X-haul traffic.

The access node is configured to connect to a broadband network gateway, BNG, which is part of the fixed core network. Data received by the BNG is forwarded to the access node and is labelled as wireline traffic. Additionally, besides the wireline traffic the access node receives the X-haul traffic forwarded by the vBBU as well.

Next, the access node aggregates the X-haul traffic with the wireline traffic to two or more network terminations. These network terminations are, for example, optical network terminations which serve RRH[+]s. Other network terminations are, for example, connected to wireline customers. The network terminations may be connected by a shared medium to the access node or may also be point-to-point connections to the access node.

The access node and the vBBU exchange resource data between each other. The resource data comprises, for example, a throughput capacity of the two or more network terminations. Based on this resource data the access node instructs the vBBU to buffer its backhaul traffic. This instruction is, for example, performed when the aggregated traffic exceeds a certain capacity threshold. The instruction continues until the aggregated traffic is less than or equal to the traffic capacity. The buffering is, for example, performed at each transmission interval of the air interface or access mode, which is the communication link between to stations in a mobile communication system.

Since the backhaul traffic is buffered at the vBBU, the network capacity doesn't need to be dimensioned based on the peaks of the X-haul traffic on any given point of time. In other words, the network capacity is dimensioned by taking into account contention which increases its cost effectiveness. This results in considerable capacity savings. Another advantage is that fairness is kept between both mobile and wireline services.

The benefit of Contention of XH with Fairness is that the degradation of Mobile best-effort traffic is softer, which translates in a better QoE for mobile users. At the same time, the wireline best-effort traffic is not hit considerably because the width of XH peaks is very narrow, order of magnitude μs, compared to the bursts present at the ingress of the wireline best-effort queue in the access network, which operate at time scales that are several orders of magnitude larger, order of magnitude ms.

According to an embodiment, the vBBU only buffers non-real time backhaul traffic.

The backhaul traffic comprises both real and non-real time traffic. The former relates, for example, to managed voice while the latter is, for example, downloading a data file. The vBBU distinguishes both traffic and only buffers the non-real time traffic when instructed by the access node. In other words, as for the real time backhaul traffic a non-blocking traffic path is provided, while the non-real time backhaul may be buffered.

Real-time data and the corresponding real-time backhaul traffic is more critical in the sense that it needs to be forwarded in a faster way compared to non-real time data in order to guarantee the QoE. It is therefore an advantage to only buffer non-real time backhaul traffic since in doing so the buffering of the backhaul traffic will impact the QoE less then when all backhaul traffic is buffered.

According to an embodiment, the backhaul traffic is buffered according to a contention ratio.

The contention ratio is defined as the ratio of the potential maximum backhaul traffic to the actual backhaul traffic. A high contention ratio implies therefore that less backhaul traffic is buffered compared to a low contention ratio but at the same time a lower effective bandwidth is offered. Depending on the to-be-served network terminations by the access node the contention ratio is configured.

According to an embodiment, the access node is further configured to buffer the wireline traffic.

Besides buffering the backhaul traffic by the vBBU, the access node may also buffer the wireline traffic. An advantage is that a trade-off may be made between the buffering of the backhaul traffic and the wireline traffic or even a combination of the two.

According to an embodiment, the backhaul traffic and the wireline traffic are buffered according to a fixed backhaul to wireline buffer ratio.

This ratio depends, for example, on the origin of the traffic and/or on the network terminations served by the access node.

It is advantageous that one of the two traffics may be favoured over the other one, since, depending on the origin of one or both of them or the to be served network terminations, it may be required that priority is given to either the X-haul or the wireline traffic. Another advantage is that a fairness may be ensured between the two traffic types.

According to an embodiment, the backhaul to wireline buffer ratio is within a range e.g. 7 to 12.

This way, the amount of buffered backhaul traffic is considerably higher than the amount of buffered wireline traffic.

According to an embodiment, the wireline traffic is buffered with fairness based on a best-effort queue size in the access node and/or vBBU.

When the buffering is based on a best-effort queue size, the current traffic load of the access node and/or the vBBU is taken into account. Although no guarantee on the QoE is given when using a best-effort queue size, this approach is advantageous since all traffic obtains a best-effort service, meaning that they obtain an unspecified bit rate and delivery time.

According to a second aspect the disclosure relates to an access node comprising a traffic manager configured:

- to receive transformed backhaul traffic, X-haul traffic, from a virtual baseband unit and to receive wireline traffic from a broadband network gateway; and
- to forward aggregated traffic comprising the X-haul traffic and the wireline traffic to one or more network terminations through the traffic manager; and
- to exchange resource data with the virtual baseband unit; and

wherein the access node is further configured to instruct the virtual baseband unit to buffer its backhaul traffic based on the resource data such that the aggregated traffic is less than or equal to a capacity threshold.

According to a third aspect the disclosure relates to a virtual baseband unit comprising a radio resource manager configured to:

- receive backhaul traffic from a serving gateway; and
- transform the backhaul traffic to X-haul traffic, under control of the radio resource manager suitable for forwarding to an access node; and
- exchange resource data with the access node; and
- receive instructions from the access node to buffer the backhaul traffic based on the resource data.

According to a fourth aspect the disclosure relates to a method for forwarding aggregated traffic comprising wireline and transformed backhaul, X-haul, traffic from an access network to one or more network terminations, the method comprising the steps of:

- receiving the wireline traffic from a broadband network gateway; and
- receiving the X-haul traffic from a virtual baseband unit; and
- obtaining resource data from the access network and the virtual baseband unit; and

wherein the method further comprises the step of:

- instructing the virtual baseband unit to buffer backhaul traffic based on the resource data such that the aggregated traffic is less than or equal to a capacity threshold.

According to a fifth aspect, the disclosure relates to a computer program product comprising a computer-executable instructions for performing the method according to the fourth aspect when the program is run on a computer.

According to a sixth aspect, the disclosure relates to a computer readable storage medium comprising the computer program product according to the fifth aspect.

According to a seventh aspect, the disclosure relates to a data processing system programmes for carrying out the method according to the fourth aspect.

## Brief Description of the Drawings

Fig. 1 illustrates a system for forwarding aggregated traffic according to an embodiment of the disclosure; and

Fig. 2 illustrates a computer system that can be configured to execute one or more embodiments of the method for forwarding data packets over a network.

## Detailed Description of Embodiment(s)

The invention made is disclosed in the attached set of independent claims. Further embodiments are disclosed in the attached set of dependent claims.

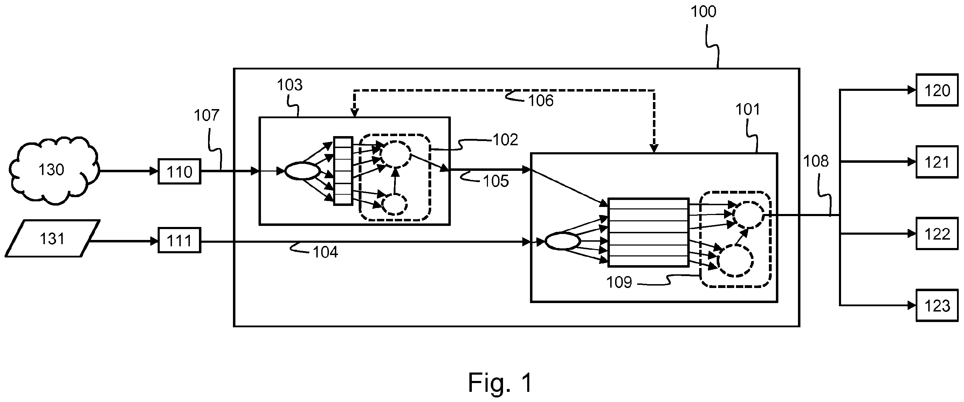

According to an embodiment, the disclosure relates to a system for forwarding aggregated traffic. Figure 1 illustrates such a system 100. The system 100 comprises an access node 101 and a virtual baseband unit, vBBU, 103. The vBBU 103 further comprises a radio resource manager 102 and the access node 101 further comprises a traffic manager 109.

The vBBU 103 is, among others, connected to a serving gateway, SGW, 110. The SGW 110 routes and forwards user data packets to the vBBU 103. The user data packets originated, for example, from a mobile network 130. The data packets received by the vBBU 103 is denoted as the backhaul traffic 107.This backhaul traffic 107 is further processed under the control of the radio resource manager 102 through the functions composing the vBBU 103 protocol stack. Through this processing, the backhaul traffic 107 in transformed in X-haul traffic 105. Next, the X-haul traffic 105 is forwarded to the access node 101.

The access node 101 is, among others, connected to a broadband network gateway, BNG, 111. The BNG 111 routes traffic to and from broadband remote access devices such as digital subscriber line access multiplexers, DSLAM, on an internet service provider's, ISP, network. This network is, for example, network 131. Data traffic originating from this network 131 is forwarded by the BNG 111 to the access node 101 and is denoted as wireline traffic 104.

The access node 101 receives the wireline traffic 104 from the BNG 111 as well as the X-haul traffic 105 from the vBBU 103. The traffic manager 109 of the access node 101 then aggregates the traffics 104 and 105, thereby obtaining aggregated traffic 108.

According to an embodiment, the access node 101 may also be virtualized, for example, into a software defined optical line termination, SD-OLT.

The radio resource manager 102 of the vBBU 103 and the traffic manager 109 of the access node 101 are based on a work conserving differentiates services, DiffServ, model. The X-haul traffic 105 is aggregated at a high priority DiffServ code point queue in the access node 101.

The aggregated traffic 108 is forwarded to two or more network terminations such as 120-123. The network terminations are, for example, optical network terminations and/or serve RRH[+]s and/or wireline devices.

The connection between the access point 101 and the several network terminations 120-123 may be a shared medium or may be, for each or a part of the network terminations, a point-to-point connection.

The system 100 exchanges resource data between the vBBU 103 and the access node 101, illustrated by the connection 106. The resource data is, for example, the available throughput of the connection from the access node 101 to the network terminations 120-123. The aggregated traffic 108 is preferably lower than the maximum available throughput at this connection.

According to an embodiment, the access node 101 instruct the vBBU 103 to buffer the backhaul throughput 107. This may, for example, be done when the aggregated throughput 108 would exceed the available throughput. By buffering the backhaul traffic 107 the X-haul traffic 105 is limited as well resulting is a lower aggregated traffic 108.

The access node 101 is further configured to buffer the wireline traffic 104 as well. This is done through the traffic manager 109. This way, a fairness may be kept between the X-haul traffic 105 on the one side, by buffering the backhaul throughput 107, and the wireline traffic 104 on the other side. The buffering of the backhaul traffic 107 and the wireline traffic 104 may, for example, be based on a fixed wireline to backhaul contention range, for example in the range of 7 to 12; or may also be dynamically changing. In another embodiment, the buffering of the backhaul 107 and wireline traffic 104 may be based on a combination wherein the backhaul traffic 107 is dynamically buffered, while the wireline traffic 104 is buffered in a fixed way.

The resulting amount of buffered wireline traffic needs to obey the following relation of throughput,

$$T_M + T_F \leq C_T,$$

wherein

- $T_M$ is the total backhaul traffic throughput; and
- $T_F$ is the total wireline traffic throughput; and
- $C_T$ is the total throughput capacity as seen from the traffic manager 109 to the network terminations 120-123.

According to an embodiment, the buffered backhaul traffic 107 and wireline traffic 104 only relates to non-real time traffic. Non-real time traffic may, for example, relates to downloading a data file. This may also be combined with a buffering based on a best-effort queue size in the access node 101 and/or the vBBU 103. The resulting amount of buffered wireline traffic needs to obey in this case the following relation of throughput,

$$(T_{RT\_M} + T_{BE\_M}) \times f_{XH} / K_{XH} + (T_{RT\_F} + T_{BE\_F}) \leq C_T,$$

wherein

- $T_{RT\_M}$ is the total real-time backhaul traffic throughput; and
- $T_{BE\_M}$ is the total best-effort backhaul traffic throughput; and
- $T_{RT\_F}$ is the total wireline real-time traffic throughput; and
- $T_{BE\_F}$ is the total best-effort wireline traffic throughput; and
- $f_{XH}$ is a X-haul multiplying factor; and
- $K_{XH}$ is a X-haul contention factor.

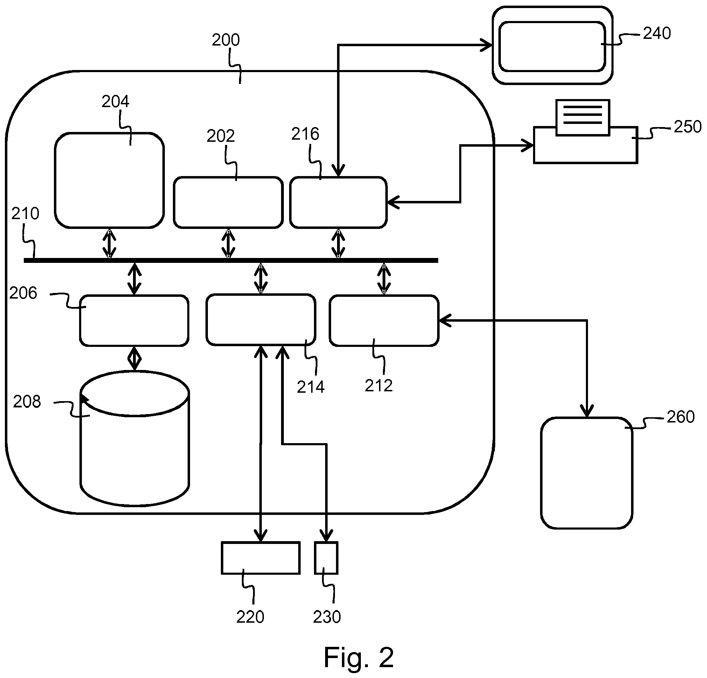

Figure 2 shows a suitable computing system 200 for performing the steps according to the above embodiments. Computing system 200 may be used as a system 100 for forwarding aggregated traffic over a network. Computing system 200 may in general be formed as a suitable general purpose computer and comprise a bus 210, a processor 202, a local memory 204, one or more optional input interfaces 214, one or more optional output interfaces 216, a communication interface 212, a storage element interface 206 and one or more storage elements 208. Bus 210 may comprise one or more conductors that permit communication among the components of the computing system 200. Processor 202 may include any type of conventional processor or microprocessor that interprets and executes programming instructions. Local memory 204 may include a random access memory (RAM) or another type of dynamic storage device that stores information and instructions for execution by processor 202 and/or a read only memory (ROM) or another type of static storage device that stores static information and instructions for use by processor 202. Input interface 214 may comprise one or more conventional mechanisms that permit an operator to input information to the computing device 200, such as a keyboard 220, a mouse 230, a pen, voice recognition and/or biometric mechanisms, etc. Output interface 216 may comprise one or more conventional mechanisms that output information to the operator, such as a display 240, etc. Communication interface 212 may comprise any transceiver-like mechanism such as for example one or more Ethernet interfaces that enables computing system 200 to communicate with other devices and/or systems 260. The communication interface 212 of computing system 200 may be connected to such another computing system by means of a local area network (LAN) or a wide area network (WAN) such as for example the internet. Storage element interface 206 may comprise a storage interface such as for example a Serial Advanced Technology Attachment (SATA) interface or a Small Computer System Interface (SCSI) for connecting bus 210 to one or more storage elements 208, such as one or more local disks, for example SATA disk drives, and control the reading and writing of data to and/or from these storage elements 208. Although the storage elements 208 above is described as a local disk, in general any other suitable computer-readable media such as a removable magnetic disk, optical storage media such as a CD or DVD, -ROM disk, solid state drives, flash memory cards, ... could be used. The system 200 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1.  A system (100) comprising:

    - a virtual baseband unit (103) further comprising a radio resource manager (102); and
    - an access node (101) further comprising a traffic manager (109); and

    wherein the virtual baseband unit (103) is configured:

    - to connect to a serving gateway (110) for receiving backhaul traffic (107); and
    - to connect to the access node (101); and
    - to transform the backhaul traffic (107) under control of the radio resource manager (102) to X-haul traffic (105); and
    - to forward the X-haul traffic (105) to the access node (101);

    wherein the access node (101) is configured:

    - to connect to a broadband network gateway (111) for receiving wireline traffic (104); and
    - to receive the X-haul traffic (105); and
    - to forward aggregated traffic (108) comprising the X-haul traffic (105) and the wireline traffic (104) to two or more network terminations (120-123) through the traffic manager (109);

    wherein the access node (101) is further configured to instruct the virtual baseband unit (103) to buffer the backhaul traffic (107) based on resource data exchanged (106) between the virtual baseband unit (103) and the access node (101) such that the aggregated traffic (108) is less than or equal to a capacity threshold.

2.  The system (100) according to claim 1, wherein the virtual baseband unit (103) only buffers non-real time backhaul traffic (107).

3.  The system (100) according to claim 2, wherein the backhaul traffic (107) is buffered according to a contention ratio.

4.  The system (100) according to claim 2, wherein the access node (101) is further configured to buffer the wireline traffic (104).

5. The system (100) according to claim 4, wherein the backhaul traffic (107) and the wireline traffic (104) are buffered according to a fixed backhaul to wireline buffer ratio.

6. The system (100) according to claim 5, wherein the backhaul to wireline buffer ratio is in the range of 7 to 12.

7. The system (100) according to claim 4, wherein the wireline traffic (104) is buffered with fairness based on a best-effort queue size in the access node (101) and/or the virtual baseband unit (103).

8. The system (100) according to claim 4, wherein the backhaul traffic (107) is buffered according to a contention ratio.

9. An access node (101) comprising a traffic manager (109) configured:

   - to receive transformed backhaul traffic, X-haul traffic, (105) from a virtual baseband unit (103) and to receive wireline traffic (104) from a broadband network gateway (111); and
   - to forward aggregated traffic (108) comprising the X-haul traffic (105) and the wireline traffic (104) to one or more network terminations (120-123) through the traffic manager (109); and
   - to exchange (106) resource data with the virtual baseband unit (103); and wherein the access node (101) is further configured to instruct the virtual baseband unit (103) to buffer its backhaul (107) traffic based on the resource data such that the aggregated traffic (108) is less than or equal to a capacity threshold.

10. A virtual baseband unit (103) comprising a radio resource manager (102) configured to:

    - receive backhaul traffic (107) from a serving gateway (108); and
    - transform the backhaul traffic (107) to X-haul traffic, (105) under control of the radio resource manager (102) suitable for forwarding to an access node (101); and
    - exchange resource data (106) with the access node (101); and
    - receive instructions from the access node (101) to buffer the backhaul traffic (107) based on the resource data.

11. A method for forwarding aggregated traffic (108) comprising wireline (104) and transformed backhaul, X-haul, (105) traffic from an access network (101) to one or more network terminations (120-123), the method comprising the steps of:

    - receiving the wireline traffic (104) from a broadband network gateway (111); and
    - receiving the X-haul traffic (105) from a virtual baseband unit (103); and
    - obtaining resource data from the access network (101) and the virtual baseband unit (103); and

    wherein the method further comprises the step of:

    - instructing the virtual baseband unit (103) to buffer backhaul traffic (107) based on the resource data such that the aggregated traffic (108) is less than a capacity threshold.

12. A computer program product comprising a computer-executable instructions for performing the method according to claim 11 when the program is run on a computer.

13. A computer readable storage medium comprising the computer program product according to claim 12.

14. A data processing system programmed for carrying out the method according to claim 12.

**Patentansprüche**

1. System (100), Folgendes umfassend:

   - eine virtuelle Basisbandeinheit (103), weiterhin umfassend einen Funkbetriebsmittelmanager (102); und
   - einen Zugangsknoten (101), weiterhin umfassend einen Verkehrsmanager (109); und wobei die virtuelle Basisbandeinheit (103) eingerichtet ist, um:
   - sich mit einem versorgenden Netzkoppler (110) zum Empfangen von Backhaul-Verkehr (107) zu verbinden; und
   - sich mit dem Zugangsknoten (101) zu verbinden; und

- den Backhaul-Verkehr (107) unter Steuerung des Funkbetriebsmittelmanagers (102) in X-Haul-Verkehr (105) umzuformen; und

- den X-Haul-Verkehr (105) an den Zugangsknoten (101) weiterzuleiten; wobei der Zugangsknoten (101) eingerichtet ist, um:

- sich mit einem Breitbandnetzkoppler (111) zum Empfangen von drahtgestütztem Verkehr (104) zu verbinden; und

- den X-Haul-Verkehr (105) zu empfangen; und

- aggregierten Verkehr (108), der den X-Haul-Verkehr (105) und den drahtgestützten Verkehr (104) umfasst, durch den Verkehrsmanager (109) an mindestens zwei Netzabschlusseinrichtungen (120 bis 123) weiterzuleiten;

wobei der Zugangsknoten (101) weiterhin eingerichtet ist, die virtuelle Basisbandeinheit (103) anzuweisen, den Backhaul-Verkehr (107) auf der Grundlage von Betriebsmitteldaten zu puffern, die zwischen der virtuellen Basisbandeinheit (103) und dem Zugangsknoten (101) ausgetauscht (106) wurden, so dass der aggregierte Verkehr (108) kleiner oder gleich einem Kapazitätsschwellenwert ist.

2. System (100) nach Anspruch 1, wobei die virtuelle Basisbandeinheit (103) nur Nicht-Echtzeit-Backhaul-Verkehr (107) puffert.

3. System (100) nach Anspruch 2, wobei der Backhaul-Verkehr (107) gemäß einem Konfliktverhältnis gepuffert wird.

4. System (100) nach Anspruch 2, wobei der Zugangsknoten (101) weiterhin eingerichtet ist, den drahtgestützten Verkehr (104) zu puffern.

5. System (100) nach Anspruch 4, wobei der Backhaul-Verkehr (107) und der drahtgestützte Verkehr (104) gemäß einem festen Backhaul-zu-drahtgestützt-Pufferverhältnis gepuffert werden.

6. System (100) nach Anspruch 5, wobei das Backhaul-zu-drahtgestützt-Pufferverhältnis in dem Bereich von 7 zu 12 ist.

7. System (100) nach Anspruch 4, wobei der drahtgestützte Verkehr (104) auf der Grundlage einer Bestintentions-Warteschlangengröße in dem Zugangsknoten (101) und/oder in der virtuellen Basisbandeinheit (103) gerecht gepuffert wird.

8. System (100) nach Anspruch 4, wobei der Backhaul-Verkehr (107) gemäß einem Konfliktverhältnis gepuffert wird.

9. Zugangsknoten (101), umfassend einen Verkehrsmanager (109), der eingerichtet ist, um:

- transformierten Backhaul-Verkehr, X-Haul-Verkehr (105), aus einer virtuellen Basisbandeinheit (103) zu empfangen und drahtgestützten Verkehr (104) aus einem Breitbandnetzkoppler (111) zu empfangen; und

- aggregierten Verkehr (108), der den X-Haul-Verkehr (105) und den drahtgestützten Verkehr (104) umfasst, durch den Verkehrsmanager (109) an mindestens eine Netzabschlusseinrichtung (120 bis 123) weiterzuleiten; und

- Betriebsmitteldaten mit der virtuellen Basisbandeinheit (103) auszutauschen (106); und

wobei der Zugangsknoten (101) weiterhin eingerichtet ist, um die virtuelle Basisbandeinheit (103) anzuweisen, ihren Backhaul-Verkehr (107) auf der Grundlage der Betriebsmitteldaten zu puffern, so dass der aggregierte Verkehr (108) kleiner oder gleich einem Kapazitätsschwellenwert ist.

10. Virtuelle Basisbandeinheit (103), umfassend einen Funkbetriebsmittelmanager (102), der eingerichtet ist, um:

- Backhaul-Verkehr (107) aus einem versorgenden Netzkoppler (108) zu empfangen; und

- den Backhaul-Verkehr (107) unter Steuerung des Funkbetriebsmittelmanagers (102) in X-Haul-Verkehr (105) umzuformen, der zum Weiterleiten an einen Zugangsknoten (101) geeignet ist; und

- Betriebsmitteldaten (106) mit dem Zugangsknoten (101) auszutauschen; und

- Anweisungen aus dem Zugangsknoten (101) zu empfangen, um den Backhaul-Verkehr (107) auf der Grundlage der Betriebsmitteldaten zu puffern.

11. Verfahren zum Weiterleiten von aggregiertem Verkehr (108), umfassend drahtgestützten (104) und transformierten Backhaul-, X-Haul- (105), -Verkehr, aus einem Zugangsnetz (101) an eine oder mehrere Netzabschlusseinrichtungen (120 bis 123), das Verfahren die folgenden Schritte umfassend:

- Empfangen des drahtgestützten Verkehrs (104) aus einem Breitbandnetzkoppler (111); und
- Empfangen des X-Haul-Verkehrs (105) aus einer virtuellen Basisbandeinheit (103); und
- Ermitteln von Betriebsmitteldaten aus dem Zugangsnetz (101) und der virtuellen Basisbandeinheit (103); und

wobei das Verfahren weiterhin den folgenden Schritt umfasst:

- Anweisen der virtuellen Basisbandeinheit (103), um Backhaul-Verkehr (107) auf der Grundlage der Betriebsmitteldaten zu puffern, so dass der aggregierte Verkehr (108) kleiner als ein Kapazitätsschwellenwert ist.

12. Computerprogrammprodukt, umfassend computerausführbare Anweisungen zum Durchführen des Verfahrens nach Anspruch 11, wenn das Programm auf einem Computer läuft.

13. Computerlesbares Speichermedium, umfassend das Computerprogrammprodukt nach Anspruch 12.

14. Datenverarbeitungssystem, das zum Ausführen des Verfahrens nach Anspruch 12 programmiert ist.


**Revendications**

1. Système (100) comprenant :

   - une unité de bande de base virtuelle (103) comprenant en outre un gestionnaire de ressources radio (102) ; et
   - un nœud d'accès (101) comprenant en outre un gestionnaire de trafic (109) ; et dans lequel l'unité de bande de base virtuelle (103) est conçue pour :
   - se connecter à une passerelle de service (110) pour recevoir un trafic de liaison terrestre (107) ; et
   - se connecter au nœud d'accès (101) ; et
   - transformer le trafic de liaison terrestre (107) sous contrôle du gestionnaire de ressources radio (102) en trafic X-haul (105) ; et
   - acheminer le trafic X-haul (105) au nœud d'accès (101) ;

   dans lequel le nœud d'accès (101) est conçu pour :

   - se connecter à une passerelle de réseau à large bande (111) pour recevoir un trafic filaire (104) ; et
   - recevoir le trafic X-haul (105) ; et
   - acheminer le trafic regroupé (108) comprenant le trafic X-haul (105) et le trafic filaire (104) à deux terminaisons de réseau (120-123), ou plus, à travers le gestionnaire de trafic (109) ;
   dans lequel le nœud d'accès (101) est conçu en outre pour donner instruction à l'unité de bande de base virtuelle (103) de mettre en mémoire tampon le trafic de liaison terrestre (107) sur la base des données de ressources échangées (106) entre l'unité de bande de base virtuelle (103) et le nœud d'accès (101) de sorte que le trafic regroupé (108) est inférieur ou égal à un seuil de capacité.

2. Système (100) selon la revendication 1, dans lequel l'unité de bande de base virtuelle (103) met uniquement en mémoire tampon le trafic de liaison terrestre en temps non réel (107).

3. Système (100) selon la revendication 2, dans lequel le trafic de liaison terrestre (107) est mis en mémoire tampon en fonction d'un taux de contention.

4. Système (100) selon la revendication 2, dans lequel le nœud d'accès (101) est conçu en outre pour mettre en mémoire tampon le trafic filaire (104).

5. Système (100) selon la revendication 4, dans lequel le trafic de liaison terrestre (107) et le trafic filaire (104) sont mis en mémoire tampon en fonction d'un rapport tampon de liaison terrestre-filaire fixe.

6. Système (100) selon la revendication 5, dans lequel le rapport tampon de liaison terrestre-filaire se trouve dans la plage allant de 7 à 12.

7. Système (100) selon la revendication 4, dans lequel le trafic filaire (104) est mis en mémoire tampon avec équité sur la base d'une taille de file d'attente au mieux dans le nœud d'accès (101) et/ou l'unité de bande de base virtuelle (103).

8. Système (100) selon la revendication 4, dans lequel le trafic de liaison terrestre (107) est mis en mémoire tampon en fonction d'un taux de contention.

9. Nœud d'accès (101) comprenant un gestionnaire de trafic (109) conçu pour :

- recevoir du trafic de liaison terrestre transformé, trafic X-haul (105), d'une unité de bande de base virtuelle (103) et recevoir du trafic filaire (104) d'une passerelle de réseau à large bande (111) ; et
- acheminer du trafic regroupé (108) comprenant le trafic X-haul (105) et le trafic filaire (104) à une ou plusieurs terminaisons de réseau (120-123) à travers le gestionnaire de trafic (109) ; et
- échanger (106) des données de ressources avec l'unité de bande de base virtuelle (103) ; et
dans lequel le nœud d'accès (101) est conçu en outre pour donner instruction à l'unité de bande de base virtuelle (103) de mettre en mémoire tampon son trafic de liaison terrestre (107) sur la base des données de ressources de sorte que le trafic regroupé (108) est inférieur ou égal à un seuil de capacité.

10. Unité de bande de base virtuelle (103) comprenant un gestionnaire de ressources radio (102) conçu pour :

- recevoir du trafic de liaison terrestre (107) d'une passerelle de service (108) ; et
- transformer le trafic de liaison terrestre (107) en trafic X-haul (105) sous le contrôle du gestionnaire de ressources radio (102) approprié pour l'acheminement à un nœud d'accès (101) ; et
- échanger des données de ressources (106) avec le nœud d'accès (101) ; et
- recevoir des instructions provenant du nœud d'accès (101) de mettre en mémoire tampon le trafic de liaison terrestre (107) sur la base des données de ressources.

11. Procédé d'acheminement de trafic regroupé (108) comprenant un trafic filaire (104) et de liaison terrestre transformée, X-haul (105), d'un réseau d'accès (101) à une ou plusieurs terminaisons de réseau (120-123), le procédé comprenant les étapes suivantes :

- la réception du trafic filaire (104) d'une passerelle de réseau à large bande (111) ; et
- la réception du trafic X-haul (105) d'une unité de bande de base virtuelle (103) ; et
- l'obtention de données de ressources à partir du réseau d'accès (101) et de l'unité de bande de base virtuelle (103) ; et

dans lequel le procédé comprend en outre l'étape suivante :

- le fait de donner instruction à l'unité de bande de base virtuelle (103) de mettre en mémoire tampon le trafic de liaison terrestre (107) sur la base des données de ressources de sorte que le trafic regroupé (108) est inférieur à un seuil de capacité.

12. Produit de programme informatique comprenant des instructions exécutables par ordinateur permettant de mettre en œuvre le procédé selon la revendication 11 lorsque le programme est exécuté sur un ordinateur.

13. Support de stockage lisible par ordinateur comprenant le produit de programme informatique selon la revendication 12.

14. Système de traitement de données programmé pour mettre en œuvre le procédé selon la revendication 12.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013020047 A1
- US 20130243075 A1
- US 20020167926 A1
- WO 2015150717 A1